Europäisches Patentamt

(19) European Patent Office

Office européen des brevets

(11) Publication number: **0 056 800**
**B1**

# EUROPEAN PATENT SPECIFICATION

(45) Date of publication of patent specification: **27.01.88**

(21) Application number: **81900859.0**

(22) Date of filing: **01.08.80**

(86) International application number:
**PCT/US80/00981**

(87) International publication number:
**WO 82/00492 18.02.82 Gazette 82/06**

(51) Int. Cl.⁴: **F 02 B 13/08, F 01 K 25/02**

(54) LIQUID FUEL SYSTEM.

(43) Date of publication of application:
**04.08.82 Bulletin 82/31**

(45) Publication of the grant of the patent:
**27.01.88 Bulletin 88/04**

(84) Designated Contracting States:
**AT CH DE FR GB LI LU NL SE**

(56) References cited:
**WO-A-79/00528**
**DE-A-2 528 150**
**DE-A-2 613 401**
**DE-B-1 021 637**
**DE-C- 703 244**
**US-A-1 905 971**
**US-A-2 359 219**
**US-A-2 755 074**
**US-A-3 443 551**
**US-A-3 565 201**
**US-A-3 885 394**
**US-A-4 097 562**

(73) Proprietor: **PRODATEK CORPORATION**
**455 B Maple Street**
**Santa Clara, CA 95050 (US)**

(72) Inventor: **PEFLEY, Richard Kramer**
**2169 Bohannon Drive**
**Santa Clara, CA 95050 (US)**
Inventor: **PULLMAN, James Barrett**
**658 Enright Avenue**
**Santa Clara, CA 95050 (US)**

(74) Representative: **Bernhardt, Klaus et al**
**Radeckestrasse 43**
**D-8000 München 60 (DE)**

Courier Press, Leamington Spa, England.

EP 0 056 800 B1

# 0 056 800

**Description**

The invention relates to a liquid fuel system for an engine comprising a fuel tank for storing vapor fuel under pressure in liquid phase with liquid and vapor in equilibrium, a fuel delivery adapter means for supplying fuel to the inlet air stream of an engine, a fuel line for carrying fuel in liquid phase from the fuel tank to said fuel delivery adapter means for direct injection of fuel into the inlet air stream of the engine, a pilot fuel line for directing liquid fuel from said fuel tank or said fuel line to said fuel delivery adapter means, said pilot fuel line comprising throttling means for reducing the pressure of the fuel in said pilot fuel line for allowing vaporisation of fuel in said pilot fuel line, said pilot fuel line being in heat exchange with said fuel in liquid phase in said fuel line in order to cool the liquid fuel in said fuel line and ensuring that said liquid fuel is injected in liquid phase.

Such a liquid fuel system is known from DE—B—1 021 637.

In this known liquid fuel system vaporized fuel is jacketed around a main fuel line carrying fuel in liquid phase so that the refrigerating effect of vapor fuel in vaporizing liquid phase is not fully available for refrigeration of vapor fuel in liquid phase in the main fuel line.

Accordingly, it is an object of the present invention to modify the prior art system to fully utilize the refrigerating effect of vapor fuel in vaporizing liquid phase to cool the remainder of the fuel in liquid phase.

This object is achieved by modifying the prior art liquid fuel system such that said pilot fuel line is coaxially located within said fuel line. In this way the refrigerating effect of vapor fuel in vaporizing liquid phase is fully available to cool the fuel in liquid phase surrounding the pilot line, so that no part of the refrigerating effect is lost to the surroundings.

To obtain a uniformly controllable introduction of the desired amount of liquid fuel directly into the inlet airstream of the engine, the fuel delivery adapter means of the liquid fuel system in accordance with a preferred embodiment of the invention includes a fuel delivery chamber in said adapter means, a series of liquid phase flow orifices connecting said delivery chamber to the inlet air stream of the engine, means slidable relative to said delivery chamber for progressively uncovering said series of orifices, and actuator means for moving said slidable means to cover or uncover said flow orifices for passage of fuel therethrough in response to engine fuel needs. Preferably in this embodiment a delivery chamber is a hollow cylinder, the slidable means is a piston slidable within that cylinder.

Preferably the orifices of the preferred embodiment of the invention have a diameter in the range of 0.051 to 0.152 mm (0.002 to 0.006 inch). Smaller holes offer excessive pressure drop and larger holes allow fuel to pass in large droplets which do not vaporize readily enough.

Other features and advantages of the present invention will become more apparent upon a perusal of the following specification taken in conjunction with the accompanying drawings wherein similar characters of reference refer to similar structural elements in each of the several views.

Brief description of drawings

Figure 1 is a foreshortened schematic elevational view, partially in section, illustrating certain aspects of a fuel system in accordance with the present invention.

Figure 2 is an enlarged sectional view of a portion of the structure shown in Figure 1 delineated by line 2—2.

Figure 3 is a side sectional view of a portion of the structure shown in Figure 1.

Figure 4 is an enlarged sectional view of a portion of the structure shown in Figure 3 delineated by line 4—4.

Figure 5 is a graph of pressure plotted versus enthalpy illustrating certain aspects of the present invention.

Figure 6 is a graph of saturated pressure plotted versus temperature illustrating other aspects of the present invention.

Figure 7 is an elevational sectional view of an alternative metering valve system.

Figure 8 is an exploded plan view of the structure shown in Figure 7.

Figure 9 is an enlarged view of the orifices shown in Figure 7.

Best mode for carrying out the invention

The preferred embodiment of the present invention is a liquid fuel system for LP-gas maintained under pressure in liquid phase with liquid and vapor in equilibrium for direct attachment onto a spark ignition engine.

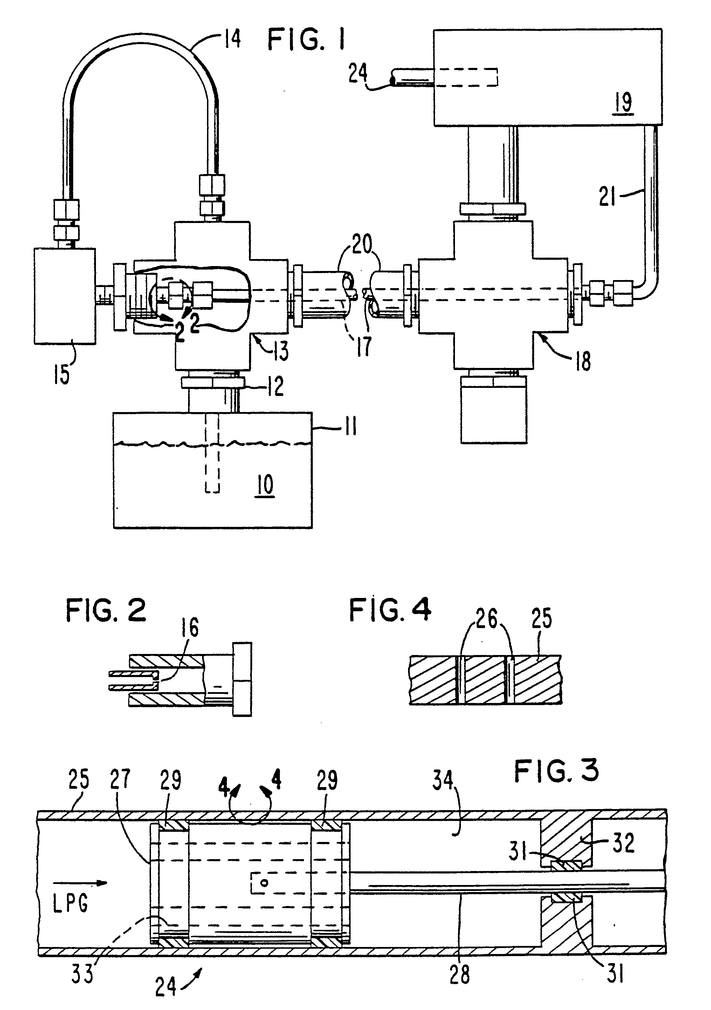

Referring now to the drawing, with particular reference to Figure 1, there is shown a liquid fuel system in accordance with the present invention. An LP-gas fuel tank 11 is provided for storing liquid fuel 10 with liquid and vapor in equilibrium in the tank 11. Liquid fuel flows out through the discharge line 12 and into the upstream pipe tee 13 where it divides into main fuel flow through main fuel line 20 and pilot fuel flow through pilot flow connecting tube 14.

Pilot fuel flows through the pilot flow connecting tube 14, the fuel lock 15 and is throttled through the orifice 16 (see Figure 2). The pilot fuel then flows down the pilot fuel line 17 coaxially located within the main fuel line 20 and through the downstream pipe tee 18 and out through a pilot fuel line 21 to a fuel delivery adapter block 19. This adapter block 19 is constructed for positioning on a conventional spark ignition engine where the air stream and fuel is normally inducted into the engine manifold. Pilot fuel flow through the orifice 16 reduces the pressure to a point where the liquid fuel will vaporize. Vaporization takes place as the fuel in the pilot line 17 moves along the length of the main fuel line 20 and heat is transferred from the liquid fuel in the main fuel line into the pilot fuel, all along the run of both lines.

Main fuel flows out of the upstream pipe tee 13, through the main fuel line 20 into the downstream pipe tee 18 and into the fuel delivery adapter block 19. The transfer of heat from the main fuel to the pilot fuel across the wall of the pilot fuel line 17 subcools the main fuel. Heat transfer into the main fuel line 20 from the surroundings may be controlled by proper design of the main fuel conduit.

Since it is important for fuel metering accuracy that the main fuel flow remain totally liquid through the metering valve into the inlet air stream, the design of the liquid fuel maintenance hardware is such as to minimize local turbulence and vortices and their accompanying local pressure drop. Excessive pressure drop in the main line can cause vapor bubbles to form.

Fuel metering is accomplished by introducing a variable flow impedance at the end of the main fuel line farthest from the fuel storage tank and nearest to the engine inlet air stream. The impedance is provided by the incremental valve schematically illustrated as 24 in Figure 1 and illustrated in greater detail in Figure 3. In addition to fuel metering, this incremental valve distributes and disperses the main fuel flow.

Referring now to Figures 3 and 4, the incremental valve 24 consists of a chamber or valve cylinder 25 in the adapter block 19 (Figure 1) and in the walls of which are drilled a longitudinal series of flow orifices 26 which can be completely covered or progressively uncovered by movement of a piston 27 by applying a force to a piston rod 28 through an actuator mechanism in response to fuel needs.

The piston 27 is provided with a pair of sealing rings 29, and the piston rod 28 is similarly provided with a seal 31 where the rod extends through an apertured end wall 32 of the cylinder. Pressure equalizing ports 33 are provided through the piston 27 to equalize the pressure from the inlet into a rear chamber 34 between the back of the piston 27 and the end wall 32.

The multiple small orifices 26 permit the refrigeration potential of the propane to be realized in lowering the air fuel mixture temperature substantially, hence increasing power and engine performance.

For a fuller understanding of the present invention and its comparison with prior art, Table II details the comparison of gasoline, propane vapor and propane liquid as fuels and shows that the energy volume density for liquid propane is theoretically about 10 percent greater than for propane vapor. For equal thermal efficiencies the power output of a given engine would increase in the same proportion as the energy volumetric density increase.

Energy density comparison[1] Gasoline and propane as fuels in internal combustion engines

| Parameter | Units | Gasoline | Propane Vapor | Liquid |
|---|---|---|---|---|
| Lower heating valve | kcal/kg | 10508 | 11009 | 1109 |
| Stoichiometric Air/fuel ratio | kg/kg | 14.5 | 15.7 | 15.7 |
| Stoichiometric Air/fuel mixture energy density | kcal/kg air | 724 | 701 | 701 |
| Heat of vaporization | kcal/kg | 83 | 0[2] | 102 |
| Air specific heat (Cp) | kcal/kg°C | | 0.24 | |
| Air cooling effect from fuel vaporization | °C | 6.17 | 0 | 9.22 |
| Inlet air density | kg/m$^3$ | 1.31 | 1.20 | 1.32 |
| Air/fuel mixture volumetric energy density | kcal/m$^3$ air | 945.9 | 840.0 | 925.4 |
| Normalized to propane vapor | | 1.13 | 1.00 | 1.10 |

[1] At standard pressure and temperature.
[2] Since fuel is already vaporized.

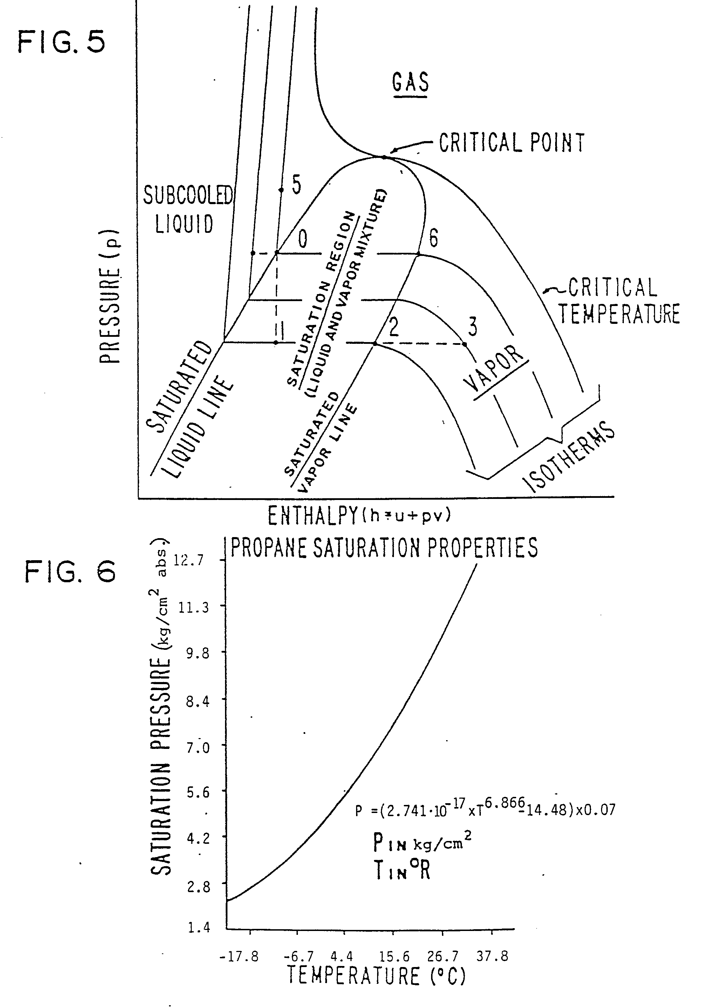

Figure 5 illustrates a typical pressure-enthalpy diagram wherein enthalpy "h" is defined in terms of specific internal energy "u," pressure "p" and specific volume "v" as in "Thermofluid Mechanics" by Pefley and Murray, McGraw-Hill Book Co., 1966, p. 155. (h=u+pv)

Prior practice to maintain a fluid in liquid phase has been to change its environment by raising pressure or extracting heat by external cooling. Referring to Figure 5, the starting point for a stored fuel is a mixture of saturated liquid (point 0) and saturated vapor point 6. The fuel tank contains saturated liquid in the lower portion of the tank and saturated vapor in equilibrium at the same pressure and temperature in the upper portion. Note in Figure 5 that within the saturation region (mixture of liquid and vapor) isothermal and isobaric lines are parallel.

Any liquid withdrawn from the tank leaves as saturated liquid (point 0). As it flows it can experience heating or cooling and a loss of pressure due to fluid friction. Any transfer of heat into the fuel raises the enthalpy (h) and transforms part of the saturated liquid to saturated vapor (point 6). The flowing fuel moves into the saturation region. This means that vapor bubbles are forming in the flowing line and the fuel is a mixture of liquid vapor, increasing in vapor and decreasing in liquid as it moves down the line.

If the flow is adiabatic (no heat transfer) but drops to a lower pressure and the same velocity then the fluid moves from saturated liquid (point 0) into the saturation region at a constant enthalpy and lower pressure (point 1). Again the fuel is a mixture of liquid and vapor, and increasing in vapor.

The present invention uses the refrigerating effect of the vaporizing fuel in pilot fuel flow to extract heat from the main flow and maintain it in the liquid phase by overcoming the effects of pressure drop and heat transfer described above. By throttling, (constant enthalpy expansion to a lower pressure from point 0 to point 1) a lower temperature is generated in the pilot flow. The pilot flow then draws heat from the main fuel flow, subcooling it from point 0 to point 4 in Figure 5, as the pilot flow continues to vaporize along the path from point 1 to point 2.

For propane the enthalpy change from point 1 to point 2 is in the range of 232 KJ/Kg (100 btu/lb.). The specific heat of liquid propane is approximately 0,8 KJ/kg°C (0.6 btu/lb.°F). Hence, a very small vapor bleed flow will produce a significant reduction in liquid temperature of a larger main fuel flow, and thus assure that the main flow remains liquid up to the point of introduction to the engine.

The theoretical end point of the heat exchange process occurs when both streams come to the same temperature (point 4 for the main flow and point 3 for the pilot flow).

In practice there will be some effect of external heat transfer from the ambient air into the main fuel stream and pressure drop in the main stream which will partially offset the effect of the cooling pilot flow. Design of the device, therefore, balances the magnitude of bleed flow, design of the delivery system and environmental conditions to achieve the most cost effective approach to liquid flow at the metering point. There is no danger of over cooling the main flow as solidification of the propane is not possible.

An added benefit of this pilot flow sub-cooling is that the pilot flow may be used for idling fuel flow on the engine. Thus, at start-up and during all engine operation, the delivery system is being cooled by the vaporization of the pilot fuel.

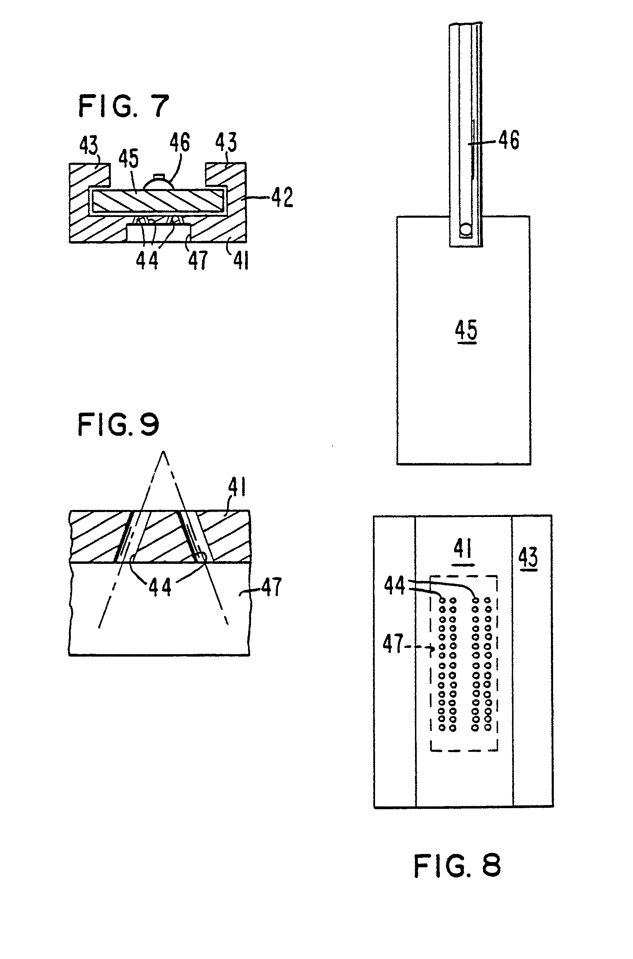

In this invention for a liquid fuel delivery system at a given ambient temperature, the pressure within the tank 11 remains constant, and as fuel flows out, more liquid vaporizes restoring the saturation pressure. As ambient temperature varies, the saturation pressure for LPG varies. Saturation pressure for propane, for example, varies according to the curve shown in Figure 6. The fuel delivery system described here senses the engine fuel requirements and offers a varying impedance to flow at the fuel delivery point such that the fuel tank pressure will induce flow through the system equal to that required.

In this design the dispersion and mixing of the fuel in air is accomplished in the same device as the impedance variation.

These functions are performed by the incremental valve which consists of piston 27 within cylinder 25 which has the longitudinal series of small orifices or ports 26. In its "off" position the piston 27 covers the orifice 26 and no fuel passes through the incremental valve.

As the piston 27 is moved from its closed position, it uncovers progressively more orifices 26, thereby reducing the flow impedance and permits the flow rate of liquid fuel to increase in response to predetermined engine requirements.

Fuel flowing through the holes uncovered by the piston is directed by the orientation of the holes which acts as orifices and vaporizes at rates determined by fuel tank pressure, hole size and fuel properties. Very small (12—25 µm) (.0005—.001 in.) holes offer excessive pressure drop. Large holes (larger than 150 µm (.006 in.) allow the fuel to pass in large droplets which do not vaporize readily enough. Orifices covering the range of 50 µm to about 150 µm (.002 to about .006 in.) are preferred. Since the piston will be moved in finite increments of distance, orifices 26 and spacing must be sized to provide a smooth variation of fuel flow rate, for all tank pressures.

An alternative metering valve system and improvements is illustrated in Figures 7—9. As shown there the metering valve consists of a flat orifice plate 41 with side tab retaining arms 42 and upper flanges 43 with the metering orifices 44 laser drilled through the plate 41. A slide metering tab 45 positioned by an actuator rod 46 is utilized to cover and uncover a predetermined number of fuel metering orifices 44. The metering tab 45 is contained between the tab retaining arms 42 and the flanges 43 to provide a mechanical alignment and preload sealing forces between the tab 45 and the plate 41. The underside of the orifice plate 41 has a milled out region 47 in the vicinity of the orifices 44 so that a wall thickness of about 0,25 mm (.010 inch) exists through which the orifices 44 extend. This thin wall section has been found to produce reliable fuel flow for the very small orifice diameters used.

As best illustrated in Figure 9 the orifices 44 have their axes in adjacent rows positioned non-parallel for impingement of the fuel streams therefrom to provide better fuel atomization in a very short distance into the air stream for thorough mixing of fuel and air.

4

**Claims**

1. A liquid fuel system for an engine comprising:

a fuel tank (11) for storing vapor fuel under pressure in liquid phase with liquid and vapor in equilibrium,

a fuel delivery adapter means (19) for supplying fuel to the inlet air stream of an engine,

a fuel line (20) for carrying fuel in liquid phase from the fuel tank (11) to said fuel delivery adapter means (19) for direct injection of fuel into the inlet air stream of the engine,

a pilot fuel line (17) for directing liquid fuel from said fuel tank (11) or said fuel line (20) to said fuel delivery adapter means (19), said pilot fuel line (17) comprising throttling means (16) for reducing the pressure of the fuel in said pilot fuel line (17) for allowing vaporisation of fuel in said pilot fuel line (17), said pilot fuel line (17) being in heat exchange with said fuel in liquid phase in said fuel line (20) in order to cool the liquid fuel in said fuel line (20) and ensuring that said liquid fuel is injected in liquid phase, characterized in that said pilot fuel line (17) is coaxially located within said fuel line (20).

2. The liquid fuel system in accordance with claim 1 wherein said fuel delivery adapter means (19) includes:

a fuel delivery chamber (25) in said adapter means,

a series of liquid phase flow orifices (26, 44) connecting said delivery chamber to the inlet air stream of the engine,

means (27, 45) slidable relative to said delivery chamber for progressively uncovering said series of orifices (26, 44), and

actuator means for moving said slidable means (27, 45) to cover or uncover said flow orifices (26, 44) for passage of fuel therethrough in response to engine fuel needs.

3. The liquid fuel system in accordance with claim 2, wherein said delivery chamber is a hollow cylinder (25) and said slidable means is a piston (27) slidable within said cylinder.

4. The liquid fuel system in accordnace with claim 2 wherein said orifices (26, 44) have a diameter in the range of 0,051 to 0,152 mm (0.002 to 0.006 inch).

**Patentansprüche**

1. Ein Flüssigbrennstoffsystem für eine Maschine, umfassend:

einen Brennstofftank (11) zur Lagerung von Dampf-Brennstoffen unter Druck in ihrer Flüssigphase mit Gleichgewicht zwischen Flüssigkeit und Dampf,

ein Brennstoffabgabeadaptermittel (19), mit dem Brennstoff in den Einlaß-Luftstrom einer Maschine geliefert wird,

eine Brennstoffleitung (20), um Brennstoff in der Flüssigphase vom Brennstofftank (11) an das Brennstoffabgabeadaptermittel (19) zum direkten Einspritzen des Brennstoffs in den Einlaßluftstrom der Maschine zu führen,

eine Pilot-Brennstoffleitung (17), mit der Flüssigbrennstoff von Brennstofftank (11) oder Brennstoffleitung (20) au das Brennstoffabgabeadaptermittel (19) gerichtet wird, wobei die Pilot-Brennstoffleitung (17) Drosselmittel (16) umfaßt, um den Druck des Brennstoffs in der Pilot-Brennstoffleitung (17) zu reduzieren, um die Verdampfung von Brennstoff in der Pilot-Brennstoffleitung (17) zuzulassen, wobei die Pilot-Brennstoffleitung (17) im Wärmeaustausch mit dem Brennstoff in Flüssigphase in der Brennstoffleitung (20) steht, um den flüssigen Brennstoff in der Brennstoffleitung (20) zu kühlen und zu gewährleisten, daß der Flüssigbrennstoff in Flüssigphase eingespritzt wird, dadurch gekennzeichnet, daß die Pilot-Brennstoffleitung (17) koaxial innerhalb der Brennstoffleitung (20) angeordnet ist.

2. Das Flüssigbrennstoffsystem nach Anspruch 1, bei dem das Brennstoffabgabeadaptermittel (19) aufweist:

eine Brennstoffabgabekammer (25) in dem Adaptermittel,

eine Serie von Flüssigphasestromöffnungen (26, 44), die die Abgabekammer mit dem Einlaßluftstrom der Maschine verbinden,

relativ zu der Abgabekammer verschiebbare Mittel (27, 45), um die Serie von Öffnungen (26, 44) progressiv freizulegen, und

Betätigungsmittel zum Bewegen der verschiebbaren Mittel (27, 45), um die Strömungsöffnungen (26, 44) zum Durchtritt von Brennstoff durch sie hindurch als Antwort auf Brennstoffbedarf der Maschine abzudecken oder freizulegen.

3. Das Flüssigbrennstoffsystem nach Anspruch 2, bei dem die Abgabekammer ein Hohlzylinder (25) ist und das verschiebbare Mittel ein Kolben (27), der in den Zylinder verschiebbar ist.

4. Das Flüssigbrennstoffsystem nach Anspruch 2, bei dem die Öffnungen (26, 44) Durchmesser im Bereich von 0,051 bis 0,152 mm (0,002 bis 0,006 Zoll) haben.

**Revendications**

1. Système à combustible liquide pour un moteur, comprenant:

un réservoir (11) à combustible destiné à emmagasiner un combustible à l'état de vapeur sous pression en une phase liquide, le liquide et la vapeur étant en équilibre,

5

**0 056 800**

un moyen adaptateur (19) de distribution de combustible destiné à introduire le combustible dans le courant d'air d'admission d'un moteur,

une conduite (20) à combustible destinée à transporter le combustible en phase liquide du réservoir (11) à combustible vers ledit moyen adaptateur (19) de distribution de combustible pour injecter directement le combustible dans le courant d'air d'admission du moteur,

une conduite (17) à combustible pilote destinée à diriger du combustible liquide dudit réservoir (11) à combustible ou de ladite conduite (20) à combustible vers ledit moyen adaptateur (19) de distribution de combustible, ladite conduite (17) à combustible pilote comprenant des moyen d'étranglement (16) destinés à réduire la pression du combustible dans ladite conduite (17) à combustible pilote pour permettre une vaporisation du combustible dans ladite conduite (17) à combustible pilote, ladite conduite (17) à combustible pilote étant en échange de chaleur avec ledit combustible en phase liquide dans ladite conduite (20) à combustible pour refroidir le combustible liquide dans ladite conduite (20) à combustible et assurer que ledit combustible liquide est injecté en phase liquide, caractérisé en ce que ladite conduite (17) à combustible pilote est disposée coaxialement à l'intérieur de ladite conduite (20) à combustible.

2. Système à combustible liquide selon la revendication 1, dans lequel ledit moyen adaptateur (19) de distribution de combustible comprend:

une chambre (25) de distribution de combustible dans ledit moyen adaptateur,

une série d'orifices (26, 44) d'écoulement de phase liquide raccordant ladite chambre de distribution au courant d'air d'admission du moteur,

des moyens (27, 25) coulissant par rapport à ladite chambre de distribution pour découvrir progressivement ladite série d'orifices (26, 44), et

des moyens actionneurs pour déplacer lesdits moyens coulissants (27, 45) afin de couvrir ou découvrir lesdits orifices (26, 44) d'écoulement pour que le combustible puisse y passer en réponse aux besoins en combustible du moteur.

3. Système à combustible liquide selon la revendication 2, dans lequel ladite chambre de distribution est un cylindre creux (25) et lesdits moyens coulissants comprennent un piston (27) pouvant coulisser à l'intérieur du cylindre.

4. Système à combustible liquide selon la revendication 2, dans lequel lesdits orifices (26, 44) ont un diamètre de l'ordre de 0,051 à 0,152 mm (0,002 à 0,006 inch).

0 056 800

FIG. 1

FIG. 2

FIG. 4

FIG. 3

LPG

FIG. 5

GAS

CRITICAL POINT

SUBCOOLED
LIQUID

5

0

SATURATION REGION
(LIQUID AND VAPOR MIXTURE)

6

CRITICAL
TEMPERATURE

SATURATED
LIQUID LINE

SATURATED
VAPOR LINE

2 3

VAPOR

ISOTHERMS

ENTHALPY(h = u + pv)

FIG. 6

PROPANE SATURATION PROPERTIES

$$P = (2.741 \cdot 10^{-17} \times T^{6.866} - 14.48) \times 0.07$$

$P_{IN}$ kg/cm$^2$

$T_{IN}$ °R

2

FIG. 7

FIG. 9

FIG. 8